# EUROPEAN PATENT SPECIFICATION

(11) **EP 4 496 359 B1**
(45) Date of publication and mention of the grant of the patent: **15.07.2026**
(21) Application number: 23185859.8
(22) Date of filing: 17.07.2023
(51) Int. Cl.: H04W 4/40, B60R 25/20, B60R 25/24, G06Q 50/26, H04W 12/77, G06Q 40/08, G06Q 50/40

(54) **METHOD FOR USER EQUIPMENT, METHOD FOR FURTHER USER EQUIPMENT, APPARATUS AND COMPUTER PROGRAM**
VERFAHREN FÜR BENUTZERGERÄT, VERFAHREN FÜR WEITERES BENUTZERGERÄT, VORRICHTUNG UND COMPUTERPROGRAMM
PROCÉDÉ POUR ÉQUIPEMENT UTILISATEUR, PROCÉDÉ POUR AUTRE ÉQUIPEMENT UTILISATEUR, APPAREIL ET PROGRAMME INFORMATIQUE

(43) Date of publication of application: 22.01.2025
(73) Proprietor: Bayerische Motoren Werke Aktiengesellschaft, 80809 München (DE)
(72) Inventor: Heidmann, Fanny, 80796 München (DE); Knott, Thorsten, 83104 Tuntenhausen (DE)

(56) References cited:
- US-A1- 2015 057 838
- US-A1- 2019 147 679
- US-A1- 2022 109 662
- US-A1- 2023 147 516
- ANONYMOUS: "Whitepaper Digital Key - The Future of Vehicle Access", 30 March 2020 (2020-03-30), pages 1 - 20, XP093000498, Retrieved from the Internet <URL:https://web.archive.org/web/20200330161158if_/https://carconnectivity.org/wp-content/uploads/2020/03/CCC_Digital_Key_2.0.pdf> [retrieved on 20221121]

## Description

The present disclosure relates to the field of digital keys. Embodiments relate to a method for user equipment, a method for further user equipment, an apparatus and a computer program.

Nowadays, analog documents are used to prove the authorization to operate a vehicle. For example, a vehicle registration certificate or insurance certificate is required to operate a vehicle. These documents must be made available to each user of the vehicle. Making the analog documents available may be resource and/or time consuming. Thus, there may be a need to provide relevant information, e.g., documents to operate a vehicle, to the user.

US 2023/147516 A1 discloses a method in which user equipment engages in digital key issuance flow or sharing flow. The user equipment establishes an encrypted communication session with a vehicle to begin generating or sharing a digital key.

It is therefore a finding that an information transfer can be improved by transmitting additional information during a key sharing flow. For example, the key sharing flow may be used to transmit the additional information, which is not related to the key sharing flow. Thus, the key sharing flow for generating a digital friend key can be utilized to transmit additional information to the user of the digital friend key. In this way, additional information can be provided to a user in a facilitated way.

Examples provide a method for executing by user equipment for improving an information transfer during a key sharing flow. The method comprises initializing the key sharing flow. Further, the method comprises using the key sharing flow for transmitting additional information non-related to the key sharing flow. For example, the additional information may be information needed to be authorized to operate the vehicle. The additional information may be a registration certificate and/or an insurance certificate, for example. Thus, the additional information may be related to the vehicle. Further, the digital information may be required to prove the authorization to operate the vehicle. By transmitting the additional information using the key sharing flow, the information transfer can be improved. In this way, the additional information can be transmitted (or shared) during the key sharing flow. Thus, no further information exchange may be necessary to provide a user needed information to operate the vehicle.

In an example, the additional information may be transmitted to a mailbox used during the key sharing flow. For example, the key sharing flow may be defined in the Car Connectivity Consortium (CCC ) standard, e.g., the Digital Key Release 3 Version 1.2.0-r14 [1]. An example of the key sharing flow between an owner device and a friend device is shown in Fig. 11-1 of [1]. Transmitting the additional information to the mailbox used during the key sharing flow may ensure that the additional information is shared during the key sharing flow. In this way, an infrastructure of the key sharing flow can be utilized to transmit additional information. Further, it can be ensured that the additional information was accessible by the further user equipment during the key sharing flow.

In an example, the additional information may be encoded in a QR code used during the key sharing flow. For example, the user equipment may generate a QR code. The QR code may be for scanning by the further user equipment to enable a key sharing flow without a need of a mailbox. Thus, the QR code may comprise the additional information. For example, the additional information may be encoded in the QR code.

In an example, the digital information may be transmitted before deleting a mailbox used during the key sharing flow. By transmitting the additional information before deleting the mailbox used during the key sharing flow, it can be ensured that the additional information is available for reception by further user equipment before the key sharing flow is terminated. Thus, the additional information can be provided to the further user equipment, such that the further user equipment can receive the additional information at an appropriate step of the key sharing flow.

In an example, the method may further comprise loading the additional information from a storage device of the user equipment. By loading the additional information from the storage device of the user equipment, the user equipment can share the additional information. Loading the additional information may allow a facilitated access to the additional information for sharing with the further user equipment.

In an example, the additional information may comprise information about a vehicle registration document, a vehicle insurance certificate and/or a proof of a successful roadworthiness test. In this way, required information for operating a vehicle can be transmitted during the key sharing flow. Further, sensible additional information can be combined with the digital friend key of the further user equipment. In this way, safety of the additional information can be improved.

In an example, the additional information may comprise a timestamp indicative of a validity of the additional information. For example, the timestamp may indicate a contract duration of the vehicle insurance certificate. In this way, a reliability of the additional information can be improved.

Examples provide a method for further user equipment for improving an information transfer during a key sharing flow. The method comprises initializing the key sharing flow and using the key sharing flow for receiving additional information non-related to the key sharing flow.

Examples relate to an apparatus, comprising interface circuitry configured to communicate with user equipment or further user equipment and processing circuitry configured to perform a method as described above.

Examples further relate to a computer program having a program code for performing the method described above, when the computer program is executed on a computer, a processor, or a programmable hardware component. The invention is defined in the appended claims.

Some examples of apparatuses, methods and/or computer programs will be described in the following by way of example only, and with reference to the accompanying figures, in which
Fig. 1 shows an example of a method for executing by user equipment for improving an information transfer during a key sharing flow;
Fig. 2 shows an example of a method for executing by further user equipment for improving an information transfer during a key sharing flow; and
Fig. 3 shows a block diagram of an example of an apparatus.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise.

It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

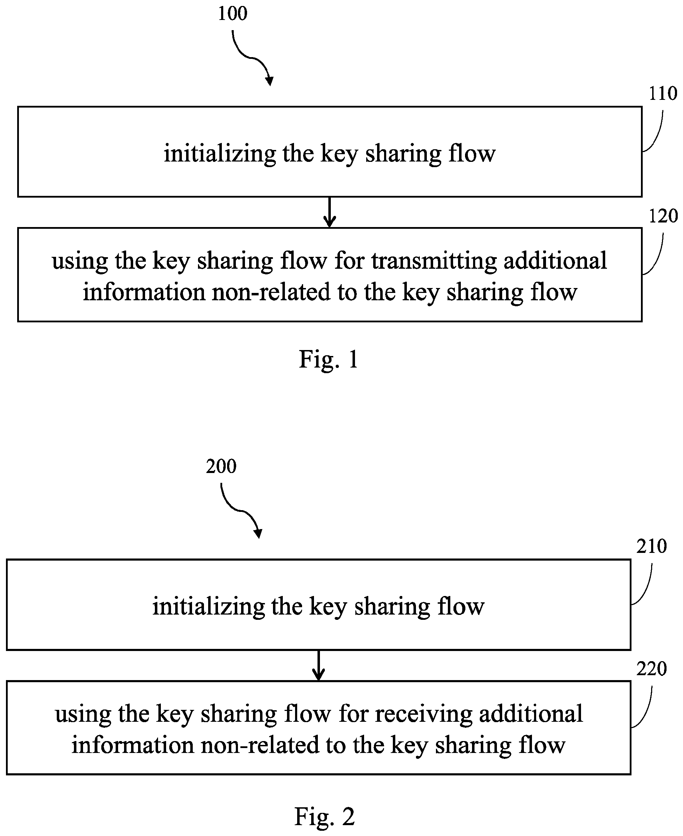

Fig. 1 shows an example of a method 100 for executing by user equipment for improving an information transfer during a key sharing flow. The method 100 comprises initializing 110 the key sharing flow. The key sharing flow may be a key sharing flow according to the CCC standard, e.g., according to [1]. Alternatively, the key sharing flow may differ from the key sharing flow defined in [1]. That is, the key sharing flow may comprise an QR code for sharing information for generating a digital friend key, for example. For example, the key sharing flow may be generated using an application, e.g., an application of an original equipment manufacturer. Alternatively, the key sharing flow may use a messenger app for sharing information for generating a digital friend key.

The user equipment may be an owner device according to the definition of the CCC standard. The user equipment may trigger a generation of a digital friend key for further user equipment. The further user equipment may be a friend device according to the definition of the CCC standard. The owner device may comprise an interface circuitry for exchanging information, e.g., to transmit the additional information and processing circuitry for performing computational tasks, e.g., loading the additional information from the storage device.

Further, the method 100 comprises using 120 the key sharing flow for transmitting additional information non-related to the key sharing flow. Transmitting the additional information non-related to the key sharing flow may allow to share information between the owner device and the friend device during the key sharing flow. The additional information shared between the owner device and the friend device can be independently of information shared during a key sharing flow to generate a digital friend key. Using the key sharing flow may allow to share security relevant information between the owner device and the friend device with increased security. For example, the additional information can be associated with the digital friend key to be generated. Thus, the additional information can be stored in a secure element of the further user equipment.

For example, the additional information may be presented during a police control to prove an authorization to operate the vehicle. In this way, a need to make an analog document available to various users of the vehicle can be omitted. Thus, a user experience can be increased.

In principle, the additional information can be a digital version of an analog document needed to operate the vehicle. The digital version of the analog document can be stored on the owner device, e.g., in a storage device of the owner device. Thus, the digital version of the analog document can be automatically shared during digital key sharing. For example, a copy of the digital version of the analog document can be shared during a key sharing flow.

Further, the digital version of the analog document can be easily carried by the user of the friend device by carrying the friend device. Thus, the user has only to carry the friend device to prove that he is authorized to operate the vehicle. For example, when going to the sea or for a hike users tend to leave the analog document in the vehicle, to reduce the burden of carrying the analog document around. However, in the event of vehicle theft the analog document is also lost. By using the additional information and thus the digital version of the analog document, the user does not has to carry an analog document any longer.

Further, a need to carry an analog document to prove the authorization to operate the vehicle may reduce a possibility to share the vehicle. When an analog document is required to operate the vehicle, a user can only share the vehicle with his friend by physically hand over the analog document. Therefore, sharing the vehicle from a distance is not possible. Using the additional information may allow the user to provide his friend, i.e., the user of the friend device, required information to prove an authorization to operate the vehicle. In this way, the user of the owner device can share the vehicle with the user of the friend device without a need of physical hand over an analog document. In this way, a user experience may be increased.

The key sharing flow may be terminated after using 120 the key sharing flow for transmitting the additional information and optionally after required process steps of the key sharing flow are performed. The key sharing flow may be for generating a digital friend key for the friend device. The key sharing flow may be triggered by the owner device.

The additional information may be transmitted during step one of the key sharing flow (according to [1]), i.e., 1. CreateMailbox(payload=sharingKeyCreationRequest, displayInformation, notificationToken) or during step 11, i.e., 11. UpdateMailbox(payload=sharingImportRequest). Thus, the additional information can be integrated into an existing message of the key sharing flow.

For example, the create mailbox message may comprise the additional information. Additionally or alternatively, the additional information may be transmitted in an extra step. For example, the extra step may be not defined in the key sharing flow according to [1]. For example, an extra message can be implemented into the key sharing flow according to [1], for transmitting the additional information. That is, an extra message may be defined for the key sharing flow to transmit the additional information.

In an example, the additional information may be transmitted to a mailbox used during the key sharing flow. Using the mailbox of the key sharing flow may allow to use an existing infrastructure of the CCC standard. In this way, information transfer can be facilitated.

In an example, the additional information may be encoded in a QR code used during the key sharing flow. For example, the additional information may be transmitted using a software application. For example, the software application (e.g., of an original equipment manufacturer) may be used to generate the OR code. The owner device may display a QR code (e.g., triggered by a processing circuitry of the user equipment). The QR code can be read by the friend device to generate the digital friend key and receive the additional information. In this way, the key sharing flow defined in [1] can be partially replaced. In principle, the additional information can be shared during any key sharing flow, i.e., using a mailbox and/or using a QR code or using other technologies such like a messenger application, for example. Sharing the additional information during the key sharing flow may allow to associate the digital friend key with the additional information.

In an example, the digital information may be transmitted before deleting a mailbox used during the key sharing flow. The deleted mailbox can be the same as the mailbox to which the additional information can be transmitted. Transmitting the additional information before deleting the mailbox may ensure that the friend device can has access to the additional information before the key sharing flow is terminated. For example, the friend device may be notified in step 13 of the key sharing flow, i.e., 13. Notify friend device, that the mailbox comprises a payload from the owner device. The payload may comprise the additional information. For example, the payload can be received in step 15, i.e., 15. payload, at the friend device from the mailbox. Thus, it can be ensured that the friend device can receive the additional information during the key sharing flow.

In an example, the method 100 may further comprise loading the additional information from a storage device of the user equipment. For example, the additional information can be generated by image acquisition of the analog document and generating a digital version of the analog document based on the acquired image. Additionally or alternatively, the digital information can be received from a backend, e.g., a backend of an original equipment manufacturer. Loading the additional information from the storage device of the user equipment may allow to easily access the additional information during the key sharing flow. Optionally, the additional information can be loaded from the storage device before initializing 110 the key sharing flow.

In an example, the additional information may comprise a timestamp indicative of a validity of the additional information. For example, the timestamp may indicate a contract duration of the vehicle insurance certificate. In this way, a reliability of the additional information can be improved. For example, when sharing a digital friend key, a digital version of an analog document can be automatically shared to the friend device for a duration of the rent only. In this way, the user of the owner device can restrict a usage of the vehicle by the additional information.

In general, user equipment may be a device that is capable of communicating wirelessly. In particular, however, the user equipment may be a mobile user equipment, e.g., user equipment that is suitable for being carried around by a user. For example, the user equipment may be a user terminal or user equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses. For example, the user equipment may be configured as digital key according to the CCC standard. Thus, the user equipment may be an owner device.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200 for executing by further user equipment for improving an information transfer during a key sharing flow. The further user equipment may be different from the user equipment as described with reference to Fig. 1. The further user equipment may be a counterpart to the user equipment as described with reference to Fig. 1. The method 200 may be performed in conjunction with the method described with reference to Fig. 1 as transmitter and receiver.

In general, further user equipment may be a device that is capable of communicating wirelessly. In particular, however, the further user equipment may be a mobile user equipment, e.g., user equipment that is suitable for being carried around by a user. For example, the further user equipment may be a user terminal or user equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses. For example, the further user equipment may be configured as digital key according to the CCC standard. Thus, the further user equipment may be a friend device.

The method 200 comprises initializing 210 the key sharing flow and using 220 the key sharing flow for receiving additional information non-related to the key sharing flow. In this way, the friend device can receive from the owner device additional information, such like a vehicle registration document, a vehicle insurance certificate and/or a proof of a successful roadworthiness test. The friend device may comprise an interface circuitry for exchanging information, e.g., to receive the additional information and processing circuitry for performing computational tasks.

The additional information may be received 220 during step four of the key sharing flow (according to [1]), i.e., 4. ReadSecureContentFromMailbox(payload, displayInformation) or during step 14, i.e., 14. ReadSecureContentFromMailbox(payload). Thus, the additional information can be integrated into an existing message of the key sharing flow. Additionally or alternatively, the additional information may be received in an extra step. For example, the extra step may be not defined in the key sharing flow according to [1]. For example, an extra message can be implemented into the key sharing flow according to [1], for receiving the additional information. That is, an extra message may be defined for the key sharing flow for receiving the additional information.

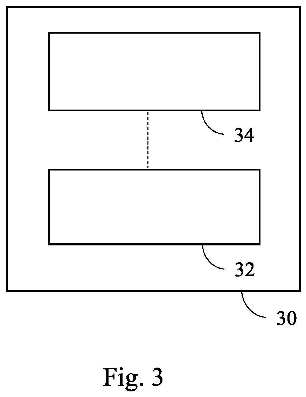

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3).

Fig. 3 shows a block diagram of an example of an apparatus 30, e.g., for user equipment. The apparatus 30 comprises interface circuitry 32 configured to communicate with user equipment or further user equipment and processing circuitry 34 configured to perform a method as described above, e.g., the method for owner device/user equipment as described with reference to Fig. 1 or the method for friend device/further user equipment as described with reference to Fig. 2. For example, the apparatus 30 may be part of the user equipment as described with reference to Fig. 1 or the further user equipment as described with reference to Fig. 2.

As shown in Fig. 3 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g., any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 3 may comprise one or more optional additional features corresponding to one or more aspects mentioned in connection with the proposed concept or one or more examples described above (e.g., Fig. 1 - 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

## Claims

1. A method (100) for executing by user equipment for improving an information transfer during a key sharing flow, comprising:
initializing (110) the key sharing flow; and
using (120) the key sharing flow for transmitting additional information non-related to the key sharing flow, wherein the additional information is independent of information shared during the key sharing flow to generate a digital friend key for a vehicle.

2. The method (100) according to claim 1, wherein
the additional information is transmitted to a mailbox used during the key sharing flow.

3. The method (100) according to any one of the preceding claims, wherein
the additional information is encoded in a QR code used during the key sharing flow.

4. The method (100) according to any one of the preceding claims, wherein
the additional information is transmitted before deleting a mailbox used during the key sharing flow.

5. The method (100) according to any one of the preceding claims, further comprising
loading the additional information from a storage device of the user equipment.

6. The method (100) according to any one of the preceding claims, wherein
the additional information comprises information about at least one of a vehicle registration document, a vehicle insurance certificate or a proof of a successful roadworthiness test.

7. The method (100) according to any one of the preceding claims, wherein
the additional information comprises a time stamp indicative of a validity of the additional information.

8. A method (200) for executing by further user equipment for improving an information transfer during a key sharing flow, comprising:
initializing (210) the key sharing flow;
using (220) the key sharing flow for receiving additional information non-related to the key sharing flow, wherein the additional information is independent of information shared during the key sharing flow to generate a digital friend key for a vehicle.

9. An apparatus (30), comprising:
interface circuitry (32) configured to communicate with user equipment or further user equipment; and
processing circuitry (34) configured to perform a method according to any of the preceding claims.

10. A computer program having a program code for performing the method (100; 200) according to claim 1 - 8, when the computer program is executed on a computer, a processor, or a programmable hardware component.

## Patentansprüche

1. Verfahren (100) zur Ausführung durch ein Benutzergerät zur Verbesserung einer Informationsübertragung während eines Schlüsselteilungsflusses, umfassend:
∘ Initialisieren (110) des Schlüsselteilungsflusses; und
∘ Verwenden (120) des Schlüsselteilungsflusses zur Übertragung zusätzlicher Information, die nicht mit dem Schlüsselteilungsfluss in Beziehung steht, wobei die zusätzliche Information unabhängig von Information ist, die während des Schlüsselteilungsflusses geteilt wird, um einen digitalen Freundeschlüssel für ein Fahrzeug zu erzeugen.

2. Verfahren (100) nach Anspruch 1, wobei
∘ die zusätzliche Information zu einem Postfach übertragen wird, das während des Schlüsselteilungsflusses verwendet wird.

3. Verfahren (100) nach einem der vorhergehenden Ansprüche, wobei
∘ die zusätzliche Information in einem QR-Code codiert ist, der während des Schlüsselteilungsflusses verwendet wird.

4. Verfahren (100) nach einem der vorhergehenden Ansprüche, wobei
∘ die zusätzliche Information übertragen wird, bevor ein Postfach gelöscht wird, das während des Schlüsselteilungsflusses verwendet wird.

5. Verfahren (100) nach einem der vorhergehenden Ansprüche, ferner umfassend
∘ Laden der zusätzlichen Information von einer Speichervorrichtung des Benutzergeräts.

6. Verfahren (100) nach einem der vorhergehenden Ansprüche, wobei
∘ die zusätzliche Information Information über wenigstens eines von einem Fahrzeugzulassungsdokument, einer Fahrzeugversicherungsbescheinigung oder einem Nachweis einer erfolgreichen Hauptuntersuchung umfasst.

7. Verfahren (100) nach einem der vorhergehenden Ansprüche, wobei
∘ die zusätzliche Information einen Zeitstempel umfasst, der eine Gültigkeit der zusätzlichen Information anzeigt.

8. Verfahren (200) zur Ausführung durch ein weiteres Benutzergerät zur Verbesserung einer Informationsübertragung während eines Schlüsselteilungsflusses, umfassend:
∘ Initialisieren (210) des Schlüsselteilungsflusses;
∘ Verwenden (220) des Schlüsselteilungsflusses zum Empfangen zusätzlicher Information, die nicht mit dem Schlüsselteilungsfluss in Beziehung steht, wobei die zusätzliche Information unabhängig von Information ist, die während des Schlüsselteilungsflusses geteilt wird, um einen digitalen Freundeschlüssel für ein Fahrzeug zu erzeugen.

9. Vorrichtung (30), umfassend:
∘ Schnittstellenschaltkreis (32), der konfiguriert ist, um mit einem Benutzergerät oder einem weiteren Benutzergerät zu kommunizieren; und
∘ Verarbeitungsschaltkreis (34), der konfiguriert ist, um ein Verfahren nach einem der vorhergehenden Ansprüche durchzuführen.

10. Computerprogramm mit einem Programmcode zur Durchführung des Verfahrens (100; 200) nach Anspruch 1 - 8, wenn das Computerprogramm auf einem Computer, einem Prozessor oder einer programmierbaren Hardwarekomponente ausgeführt wird.

## Revendications

1. Procédé (100) destiné à être exécuté par un équipement utilisateur pour améliorer un transfert d'informations pendant un flux de partage de clé, comprenant :
∘ l'initialisation (110) du flux de partage de clé ; et
∘ l'utilisation (120) du flux de partage de clé pour transmettre des informations supplémentaires non liées au flux de partage de clé, les informations supplémentaires étant indépendantes des informations partagées pendant le flux de partage de clé pour générer une clé d'ami numérique pour un véhicule.

2. Procédé (100) selon la revendication 1, dans lequel
∘ les informations supplémentaires sont transmises à une boîte aux lettres utilisée pendant le flux de partage de clé.

3. Procédé (100) selon l'une quelconque des revendications précédentes, dans lequel
∘ les informations supplémentaires sont codées dans un code QR utilisé pendant le flux de partage de clé.

4. Procédé (100) selon l'une quelconque des revendications précédentes, dans lequel
o les informations supplémentaires sont transmises avant la suppression d'une boîte aux lettres utilisée pendant le flux de partage de clé.

5. Procédé (100) selon l'une quelconque des revendications précédentes, comprenant en outre
∘ le chargement des informations supplémentaires à partir d'un dispositif de stockage de l'équipement utilisateur.

6. Procédé (100) selon l'une quelconque des revendications précédentes, dans lequel
o les informations supplémentaires comprennent des informations concernant au moins l'un parmi un document d'immatriculation de véhicule, un certificat d'assurance de véhicule ou une preuve d'un contrôle technique réussi.

7. Procédé (100) selon l'une quelconque des revendications précédentes, dans lequel
∘ les informations supplémentaires comprennent un horodatage indicatif d'une validité des informations supplémentaires.

8. Procédé (200) destiné à être exécuté par un équipement utilisateur supplémentaire pour améliorer un transfert d'informations pendant un flux de partage de clé, comprenant :
∘ l'initialisation (210) du flux de partage de clé ;
∘ l'utilisation (220) du flux de partage de clé pour recevoir des informations supplémentaires non liées au flux de partage de clé, les informations supplémentaires étant indépendantes des informations partagées pendant le flux de partage de clé pour générer une clé d'ami numérique pour un véhicule.

9. Dispositif (30), comprenant :
∘ un circuit d'interface (32) configuré pour communiquer avec un équipement utilisateur ou un équipement utilisateur supplémentaire ; et
∘ un circuit de traitement (34) configuré pour exécuter un procédé selon l'une quelconque des revendications précédentes.

10. Programme d'ordinateur ayant un code de programme pour exécuter le procédé (100 ; 200) selon la revendication 1 - 8, lorsque le programme d'ordinateur est exécuté sur un ordinateur, un processeur ou un composant matériel programmable.
